# EUROPEAN PATENT APPLICATION

(11) **EP 4 207 544 A1**
(43) Date of publication of application: **05.07.2023**
(21) Application number: 22216905.4
(22) Date of filing: 28.12.2022
(51) Int. Cl.: H02J 7/00

(54) **METHOD FOR DETERMINING A SOCKET TYPE AND A CHARGING MODE FOR A BATTERY, AN ELECTRICAL PLUG, A CHARGING CORDSET AND A CONTROLLER**

(30) Priority: 28.12.2021 US 202163294095 P
(71) Applicant: Webasto Charging Systems, Inc., Monrovia, CA 91016 (US)
(72) Inventor: Gabrielsson, Peter, Monrovia (US); Steinbuchel, Herman, Monrovia (US)
(74) Representative: Nordmeyer, Philipp Werner

(57) **Abstract**

The present invention pertains to a method for determining a socket type (1, 2) of a socket (3) by means of inserting an electric plug (4), which fits into all of the respective socket types (1, 2), wherein a first grounding contact (7) of the plug (4) is always connected to a first grounding contact (9) of the socket (3) when the plug (4) is inserted into the respective socket type (1, 2). The socket type (1, 2) is determined by measuring whether a second grounding contact (8) of the plug (4) is connected to a second grounding contact (10) of the socket (3), hence to an electrical grounding (13), or not. A controller (14) is adapted to determine the socket type (1, 2) based on this measurement. The measurement is based on a voltage drop between the second grounding contact (8) and an electrical grounding (13).

## Description

### Technical Field

The invention relates to a method for determining a socket type device, a method for selecting a charging mode for a battery of an electric vehicle, an electrical plug, a charging cordset comprising said plug and a controller.

### Technological Background

An electric vehicle can be charged at conventional domestic sockets which are fused to a certain maximum load they can deliver. Charging an electric vehicle via a domestic socket usually can take several hours wherein the socket is to deliver its maximum load to charge the battery of the electric vehicle. Yet, many domestic sockets were designed to provide current for household appliances, such as a water boiler or a washing machine for instance, which do not require the domestic socket to constantly provide current at the respective electric maximum load capacity of the socket over a long period of time. This can happen when an electric vehicle is charged, wherein the socket is required to deliver a larger amount of current, for instance the respective fused amount of current such as 16 A in many European countries, over said long period of time. Hence, domestic sockets can be damaged due to structural and design constraints which can differ from country to country even though these domestic sockets are operated within their respective electrical fuse rating. At present, the risk of damage is reduced by selecting a lower, safe load, than the fused load. For instance, reduced charging currents of 14 A is used for charging the battery of the electric vehicle when the respective domestic socket is fused to currents of 16 A. Yet, this safe load or safe current for a socket can differ from one socket type to another socket type or respectively from one country to another.

DE 11 2014 003 362 T5 presents a method for selecting a charging mode based on an information signal indicative of the maximum load the respective socket can actually provide over a long period of time which is transmitted between the socket and the plug via a communications link between the socket and the plug wherein the communications link is independent of and provided separately from the electric circuit. A disadvantage of this method is that many domestic sockets do not provide such a communications link and the socket type for determining the actual maximum load capacity of the socket hence cannot be determined.

An electrical plug which is mechanically adaptable to different socket types is known from DE 10 2011 102 009 B4 wherein a controller verifies whether all grounding contacts are connected when the plug is inserted into the respective socket before electric current is delivered. A disadvantage is that a rim of the plug is to be mechanically adjusted by a user to the respective specific socket type.

The EP 2 933 880 B1 presents an electrical plug which is mechanically compatible to different socket types by means of interconnected grounding contacts within the plug such that a grounding contact always is provided when the plug is inserted into the respective socket type. A disadvantage is that the respective type of the socket is not determined.

### Detailed description

Starting from the prior art, is an object of the present invention to provide a method for determining a socket type, a method for selecting a charging mode for an electric vehicle based on the socket type, an electrical plug, a charging cordset for an electric vehicle and a controller.

A solution is provided by the subject matter according to the independent claims. Advantageous additional embodiments of the invention are described by the dependent claims, the following description and the Figures.

The invention relates to a method for determining a socket type of a socket, including the steps of:
a. inserting a plug, preferably a plug of a charging cordset for charging the battery of an electric vehicle, into the socket,
b. connecting a first grounding contact of the plug to a first grounding contact of the socket by the insertion of the plug into the socket, and
c. determining whether a second grounding contact of the plug is connected to a second grounding contact of the socket and determining the socket type on the basis of this measurement.

In other words, the measurement whether the second grounding contact of the plug is connected to the second grounding of the socket may be based on whether the second grounding of the contact is isolated or connected to the corresponding second grounding contact of the socket. The electrical plug may fit into the respective socket type, wherein the first grounding contact of the plug may be connected to the first grounding contact of the socket when the plug is inserted into the socket of the respective socket type.

For instance, the second grounding contact of the plug may be isolated or not be connected to the second grounding contact of the socket when the plug is inserted into the socket of a first socket type or may be connected to the second grounding contact of the socket when the plug is inserted into the socket of a second socket type. The first and/or second grounding contacts may be one or more electrical grounding contacts. The plug may fit to the respective socket types, wherein the electrical grounding is always provided by at least the first grounding contact when the plug is inserted into the respective socket. The grounding contacts of the plug may be electrically isolated from one another. Hence, the socket type may be determined based on whether the second grounding contact of the plug is connected to the respective second grounding contact of the socket or is isolated, that is not connected to an electrical grounding.

This has the advantage that the socket type can be determined based on the connections of the grounding contacts of the plug and the socket such that the socket does not need to provide a further control signal about the socket type and/or a maximum load capacity via a separate communication link. So, the plug can determine the socket type of common domestic sockets without the need of further modification of the socket.

The invention also includes embodiments by which additional advantages are obtained.

In one embodiment, said method includes the steps of:
a. determining the socket type to be a first socket type if the second grounding contact of the plug is isolated, particularly not connected to the second grounding contact of the socket,
b. determining the socket type to be a second socket type if the second grounding contact of the plug is connected to the second grounding contact of the socket.

In other words, the electrical plug may fit to the first and to the second socket type, wherein the first grounding contact of the plug, may be connected to the first grounding contact of the socket when the plug is inserted into the socket of the respective socket type whereas the second grounding contact may be isolated when the plug is inserted into the socket of the first socket type or may be connected to the second grounding contact of the socket when the plug is inserted into the socket of the second socket type. The plug may fit to the first and second socket type, such as for a CEE 7/7 plug type, particularly a Schuko plug type, for instance.

This has the advantage that the socket type can be determined based on whether the second grounding contact of the plug is connected or isolated, hence not connected when the plug is inserted into any socket. Furthermore, common domestic sockets without modification can be used for determining the socket type for charging an electric vehicle.

In one embodiment, the first socket type corresponds to a CEE 7/5 type socket according to a CEE 7 standard, particularly to a French type E socket, and the second socket type corresponds to a CEE 7/3 type socket according to the CEE 7 standard, particularly to a German type F socket. In other words, the first and second socket type may be suitable for a CEE 7/7 Schuko type plug. This has the advantage that several countries may be covered by selecting the respective socket type to be French or German and that the respective socket types can be served with a plug, particularly a CEE 7/7 Schuko type plug, which may fit to both socket types without a mechanical modification by a user. This has the advantage that it can be determined whether the plug is inserted into a French or German socket outlet.

In one embodiment, the measurement whether the second grounding contact of the plug is connected to the second grounding contact of the socket comprises the steps of:
a. applying a (current limited) test voltage to the second grounding contact of the plug,
b. measuring a voltage drop between the second grounding contact and an electrical grounding,
c. determining that the second grounding contact of the plug is connected to the second grounding contact of the socket if the voltage drop essentially equals zero or that the second grounding contact of the plug is isolated, particularly not connected to the second grounding contact of the socket, if the voltage drop essentially equals the test voltage.

In other words, the test voltage may be a voltage from an independent circuit, wherein the test voltage may be a low voltage which is not dangerous for humans. The test voltage may be current limited through a resistor or other means. The test voltage may be an alternating or direct voltage of low enough amplitude to be safe for human touch according to applicable regulations. Alternatively, the test voltage may be a voltage derived from a phase pin of the plug, particularly a primary electric circuit, wherein appropriate preconditioning may be set up to limit voltage and current, particularly by means of a resistor or other means. The test voltage may also be induced by a controller, particularly a microcontroller which is connected to the second grounding contact and to an electrical grounding. The controller may measure the voltage drop between the second grounding contact and the electrical grounding. When the plug is connected to the socket, the controller may determine that the socket belongs to the first socket type (CEE 7/5 French) if the voltage drop between the second grounding contact and the electrical grounding essentially equals the test voltage and if the voltage drop between the second grounding contact and the electrical grounding essentially equals zero, the controller may determine that the socket belongs to the second socket type (CEE 7/3 German). The electrical grounding may be provided by commonly known grounding mechanisms of electrical appliances or vehicles. For instance, the electrical grounding may be provided by the first grounding contact of the plug which always is connected when the plug is being inserted into the socket of to the respective socket type. This has the advantage that the socket type can be determined based on evaluating voltage drops between grounding contacts.

In one embodiment, determining whether the plug is inserted into the socket comprises the steps of:
a. applying the test voltage to the first grounding contact of the plug,
b. measuring the voltage drop between the first grounding contact and the electrical grounding,
c. determining that the plug is inserted into the socket if the voltage drop between the first grounding contact of the plug and the electrical grounding essentially equals zero, particularly the first grounding contact of the plug being connected to the first grounding contact of the socket, or that the plug is not inserted into the socket if the voltage drop essentially equals the test voltage.

In other words, the first and second grounding contacts of the plug may be electrically isolated from another, wherein the first grounding contact of the plug may always be connected to the respective first grounding contact of the socket when the plug is inserted into the socket of the respective socket type. Said test voltage may be applied to the first grounding contact or the controller which may be connected to the first grounding contact of the plug and to an electrical grounding may apply the test voltage to the first grounding contact of the plug. The controller may measure the voltage drop between the first grounding contact and the electrical grounding. The controller verifies that the plug is inserted into to the socket if the voltage drop between the first grounding contact and the electrical grounding essentially equals zero. When the plug is a CEE 7/7 Schuko type plug, the first grounding contact may be the grounding contact providing a pin hole such that the first grounding contact may always be connected to the electrical grounding when said plug is inserted into a CEE 7/5 French or CEE 7/3 German socket. This has the advantage that it can be determined whether the plug is inserted into the socket without the socket having to provide a voltage or before an electric current of a charging station or a wallbox is released.

In one embodiment, determining whether the plug is inserted into the socket comprises the steps of:
a. measuring an operating voltage between at least one voltage pin of the plug and the electrical grounding or between at least two voltage pins,
b. determining that the plug is inserted into the socket if the operating voltage corresponds to a threshold value or that the plug is not inserted into the socket if the operating voltage is zero.

In other words, the operating voltage may be measured between two voltage pins or between a phase pin of the plug and an electrical grounding. The voltage pins may be the pins of a primary electric circuit of the plug. For instance, a controller which may be connected to the electrical grounding, particularly the first grounding contact of the plug, and to at least one voltage pin of the plug, may measure a voltage drop between the electrical grounding and the voltage pin or between two voltage pins, wherein the controller may determine that the plug is inserted into the socket or that the socket is under tension if the voltage drop essentially corresponds to an operating voltage of the respective socket type or to a threshold value. This has the advantage that it can be determined whether the plug is inserted into the socket. Furthermore, the determining may be independent of an orientation how the plug is inserted into the socket. For instance, a CEE 7/7 Schuko plug can be inserted into a German CEE 7/3 socket in two orientations, whereas this is not possible with a French CEE 7/5 socket due to the neutral pin in the socket.

The second aspect of the first embodiment of the invention relates to a method for selecting a charging mode of a charging operation of a battery of an electrical vehicle which includes the steps of determining the socket type on the basis of said method previously mentioned and selecting the charging mode on the basis of the socket type determined. In other words, if the first socket type is detected, a first charging mode may be selected, wherein the first charging mode comprises for instance a first maximum charging current, for instance of 13 A. If the second socket type is detected, a second charging mode may be selected, wherein the second charging mode comprises a second maximum charging current, for instance 14 A. The maximum charging currents of the respective charging modes are exemplary and may be varied according to the respective design constraints of the sockets such that the charging current is set to a value below or equal the respective electric fuse of the socket. This has the advantage the respective charging mode considers different design constraints of the respective socket types, particularly the French and German socket types, such that damage of the socket can be prevented when the electric vehicle is charged at the socket.

The second embodiment of the invention relates to an electrical plug, preferably a plug of a charging cordset for charging the battery of an electric vehicle, wherein the plug includes:
a. a first grounding contact and a second grounding contact, wherein the first and second grounding contacts are electrically isolated from one another, and
b. a probing arrangement connected to the second grounding contact, wherein the probing arrangement is adapted to output a second signal indicative of whether the second grounding contact is connected to a second grounding contact of a socket when being inserted into the socket.

In other words, the electrical plug may be adapted to respectively fit into a socket corresponding to the first (CEE 7/5 French) or a second socket type, wherein the plug comprises at least two grounding contacts and at least two voltage pins. The probing arrangement may be connected to a controller or be connected to the controller via a communication arrangement. The probing arrangement may be connected to the second grounding contact of the plug, wherein the controller may be adapted to send a test voltage to the second grounding contact or and/or to measure a voltage drop between the second grounding contact of the plug and the electrical grounding by means of the probing arrangement. The electrical grounding may be provided by the first grounding contact of the plug and/or by a grounding mechanism of the electric vehicle. The test voltage may be an alternating or direct voltage of low enough amplitude to be safe for human touch according to applicable regulations. Alternatively, the test voltage may be a voltage derived from a phase pin of the plug, particularly a primary electric circuit, wherein appropriate preconditioning may be set up to limit voltage and current, particularly by means of a resistor or other means.

Alternatively, the probing arrangement may be connected to a primary electric circuit of the plug, preferably a phase line carrying the operating voltage, wherein the test voltage for the measurement may be branched from the primary circuit via the probing arrangement. In this case, the controller on the first end of the probing arrangement may be adapted to measure the voltage drop between the second grounding contact and the electrical grounding by means of the probing arrangement. For this, the controller may be connected to the probing arrangement via a voltage converter.

The probing arrangement may be adapted to measure the voltage drop between the second grounding contact and the electrical grounding wherein the measurement output comprises the second signal. The second signal may comprise a voltage drop indicating that the second grounding contact of the plug is connected to the second grounding contact of the socket, that is grounded, if the voltage drop at the second grounding contact is zero, whereas the second grounding contact of the plug is isolated, particularly not connected to the second grounding contact of the socket, if the voltage drop is different than zero, particularly if the voltage drop corresponds to the test voltage. The test voltage may be provided by the controller or from a voltage pin of the plug, which is connected to phase of the socket.

The controller may be adapted to determine that the socket belongs to the first socket type, particularly the French CEE 7/5 socket type, if the second signal essentially equals the test voltage and if the second signal essentially equals zero, the controller may be adapted to determine that the socket belongs to the second socket type, particularly the German CEE 7/3 socket type.

In one embodiment of the electrical plug, the probing arrangement is connected to a first grounding contact and adapted to output a first signal indicative of whether the first grounding contact is connected to a first grounding contact of the socket and/or the probing arrangement is connected to at least one voltage pin wherein the probing arrangement is adapted to output a third signal indicative whether an operating voltage is applied to the at least one voltage pin. In other words, the first signal may be a voltage value indicating a voltage drop between the first grounding contact of the plug and the first grounding contact of the socket when the plug is being inserted into the socket corresponding to the respective socket type. The probing arrangement may be connected to the first grounding contact and/or the at least one voltage pin at the second end. The controller connected to the probing arrangement, preferably via a voltage converter, may be adapted to measure said voltage drop. The controller may be adapted to determine that the plug is inserted into the socket if the third signal equals zero. If the third signal essentially corresponds to the test voltage or is different than zero, the controller may be adapted to determine that the plug is not inserted into the socket.

Supplementary or alternatively, a voltage pin and the electrical grounding, particularly the first grounding contact of the plug, or two voltage pins of the plug are adapted to be electrically connected to the controller via the probing arrangement, wherein the controller may be adapted to measure a voltage difference between the voltage pin and the electrical grounding or between the two voltage pins. The third signal may be based on said voltage difference. The controller may be adapted to determine that the plug is inserted into the socket and/or that the socket is under tension if the third signal is different than zero or correspond to a threshold value, for instance the operating voltage of the respective socket type. The controller may be adapted to determine that the plug is not inserted into the socket or that the socket is not under tension if the third signal essentially equals zero. Furthermore, the controller may be adapted to measure direct and/or alternating voltages.

This has the advantage that the plug is adapted to check if it is inserted into the socket based on the distribution of the grounding contacts and/or whether the socket is energized or not.

In one embodiment, the electrical plug includes a communication arrangement for transferring the respective signal to a controller for determining the socket type on the basis of the second signal and/or for determining whether the electrical plug is inserted into the socket on the basis of the first and/or third signal. In other words, the controller may determine the socket type based on the second signal and additionally whether the plug is being inserted into the socket based on the first and/or the third signal. The respective signals may be output by the probing arrangement and handed over to the communication arrangement to send respective signal to the controller. This has the advantage that the controller may be detached from the plug and may be comprised in a charging cordset or in an electric vehicle.

In one embodiment of the electrical plug the probing arrangement and/or the communication arrangement is connected to the controller, wherein the plug preferably comprises the controller. In other words, the controller may be located at a distance from the plug, e.g. in a charging cordset and/or in an electric vehicle. Said controller may be connected to the plug via the probing and/or communication arrangement. The probing arrangement may be a wire-based connection, whereas the communication arrangement may be a wire-based and/or a wireless connection to the controller. This has the advantage that less modification of a normal plug, particularly a CEE 7/7 Schuko type plug, is necessary.

In one embodiment, a type of the electrical plug corresponds to a CEE 7/7 plug type according to a CEE 7 standard, particularly to a Schuko type plug, wherein the first grounding contact of the plug preferably provides a pin hole. In other words, the plug may be adapted to fit both the sockets of the first and second socket type, wherein the first socket type may be a French CEE 7/5 type E socket and the second socket type may be a German CEE 7/3 F type socket. The pin hole may be integrated in the second grounding contact of the plug which always provides an electrical grounding when the plug is being inserted into the French type E socket, particularly due to the pin hole because of the grounding pin of said socket type, or the German type F socket. This provides the advantage that the plug fits the French type E socket and the German type F socket without requiring any mechanical modification by a user.

A third embodiment of the invention relates to a controller comprising at least one processor and a computer readable storage medium, wherein the computer readable storage medium comprises instructions which, when executed by the at least one processor, cause the controller to determine a socket type on the basis of a second signal indicative whether a second grounding contact of an electrical plug is connected to a second grounding contact of a socket. In other words, the at least one processor may be a microprocessor and/or a microcontroller and/or a FPGA (Field Programmable Gate Array and/or a DSP (Digital Signal Processor).

In one embodiment of the controller, the computer readable storage medium comprises instructions which, when executed by the at least one processor, cause the controller to determine whether the electrical plug is inserted into the socket based on a first signal indicative whether a first grounding contact of the electrical plug is connected to a first grounding contact of the socket and/or based on a third signal indicative whether an operating voltage is applied to at least one voltage pin of the electrical plug.

A fourth embodiment of the invention relates to a charging cordset for charging a battery of an electric vehicle comprising at least one of said electrical plug and/or at least one of said controller.

Another embodiment relates to an electric vehicle comprising at least one of said electrical plug and/or said controller and/or said charging cordset. The electric vehicle is preferably designed as a motor vehicle, in particular as a passenger car or truck, or as a passenger bus or motorcycle, wherein the electric vehicle is particularly designed as an electric or a hybrid vehicle.

The invention also relates to realizations comprising a combination of the features of several of the described embodiments.

### Description of the Figures

In the following, the present disclosure will be explained in more detail with reference to the accompanying Figures, showing:
Figure 1 a schematic view of a charging cordset comprising the electrical plug which is adapted to determine a socket type;
Figure 2 a schematic view of one embodiment of the probing arrangement for determining the socket type within the electrical plug; and
Figure 3 a schematic view of the method to determine the socket type and a charging mode.

### Detailed description of the Figures

The embodiment explained below is a preferred embodiment of the invention. In the embodiment, the described components of the embodiment each represent individual features of the invention to be considered independently of one another, which also further form the invention independently of one another in each case and are thus also to be regarded as a component of the invention individually or in a combination other than that shown. Furthermore, the described embodiment can also be supplemented by further of the already described features of the invention.

In the Figures, like elements are denoted by identical reference numerals and repeated description thereof may be omitted in order to avoid redundancies.

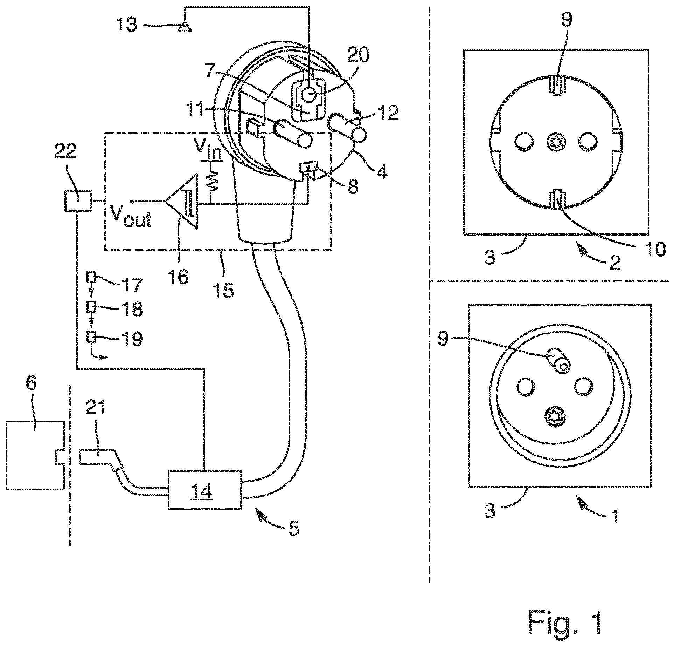

A use case underlying Figure 1 may be a user who charges an electric vehicle 6, particularly an electric or hybrid vehicle, by means of a charging cordset 5 at a socket 3.

The charging cordset 5 comprises a connector 21 on one end, which is to be connected to the electric vehicle 6. On the opposite end, the charging cordset 5 comprises at least one electrical plug 4 which is suitable for the socket 3 of the first socket type 1 and the second socket type 2. The plug 4 may be a CEE 7/7 Schuko type plug. The first socket type 1 may be a French CEE 7/5 type E socket and the second socket type 2 may be a German type F socket, wherein the first socket type 1 comprises a first socket grounding contact 9, which is designed to be a pin, and the second socket type 2 comprises two socket grounding contacts 9 and 10 which are designed to be latches.

The plug 4 may comprise voltage pins 11 and 12, wherein the voltage pin 12 may be the voltage pin to be connected to a phase of the socket, hence carrying an operating voltage. The voltage pin 11 may be neutral. The plug 4 also comprises a first grounding contact 7 which is connected to an electrical grounding 13 when the plug 4 is inserted into the first or second socket type 1,2 via the respective first socket grounding contact 9 of the first 1 and second socket type 2. However, the second grounding contact 8 of the plug only is connected to the second socket grounding contact 10 when the plug is inserted into the socket 3 of the second socket type 2, whereas the second grounding contact 8 is isolated, particularly not connected to an electrical grounding 13, when the plug is inserted into the socket 3 of the first socket type 1.

The controller 14 is adapted to determine the socket type 1, 2 of the socket 3 where the plug 4 at the current location of the electric vehicle 6 is inserted to, e.g. whether the electric vehicle 6 is about to be charged in France or in Germany or any other country using the first 1 or second socket type 2. To determine the socket type 1, 2 of the socket 3 where the plug 4 at the current location is inserted into, the second grounding contact 8 of the plug 4 is connected to a probing arrangement 15 which is adapted to apply a test voltage Vᵢₙ via a resistance R to the second grounding contact 8. The test voltage Vᵢₙ may be a low voltage, particularly below 50 V for an alternating voltage or below 120 V for a direct voltage, which may come from the controller 14.

Alternatively, the test voltage Vᵢₙ may come from a branch of the voltage pin 12, particularly from the primary circuit of the plug 4. The probing arrangement 15 outputs the second signal 17 which comprises a voltage drop Vₒᵤₜ which is measured between the second grounding contact 8 and the electrical grounding 13 wherein the electrical grounding 13 may be the electrical grounding from the first grounding contact 9 of the socket when the plug is inserted into the respective socket 3 or the electrical grounding 13 may be provided by a grounding mechanism of the electric vehicle 6.

If the plug 4 is inserted into the first socket type 1, the second grounding contact 8 is isolated, hence not connected to a corresponding second socket grounding contact 10, such that the voltage drop Vₒᵤₜ essentially corresponds to the test voltage Vᵢₙ. If the plug 4 is inserted into the second socket type 2, the second grounding contact 8 is connected to the respective second socket grounding contact 10, such that the voltage drop Vₒᵤₜ essentially equals zero. For the measurement by the probing arrangement 15, the voltage drop Vₒᵤₜ may be converted by a voltage converter 16. The voltage drop Vₒᵤₜ is measured by the probing arrangement 15 wherein the communication arrangement 22 sends the second signal 17 to the controller 14. The second signal 17, hence the measured voltage drop Vₒᵤₜ, is essentially zero if the second grounding contact 8 is connected to the second socket grounding contact 10, whereas the second signal 17 essentially equals the test voltage Vᵢₙ if the second grounding contact 8 is isolated. The controller 14 is adapted to determine the socket type 1, 2 to be the first socket type 1 if the second signal 17 essentially equals the test voltage Vᵢₙ or to be the second socket type 2 if the second signal 17 essentially equals zero. Supplementary or alternatively, the controller 14 may also comprise the communication arrangement 22 and/or the probing arrangement 15 which outputs the second signal 17.

Based on the socket type 1, 2, the controller 14 is adapted to determine a charging mode of the vehicle. For instance, when the first socket type 1 is determined by the controller 14, the controller 14 may be adapted to opt for a first charging mode which limits the maximum current to a first threshold value, for instance 14 A. When the second socket type 2 is determined, the controller 14 may be adapted to opt for a second charging mode which limits the maximum current to a second threshold value, for instance 13 A. The limit of the charging current to the respective threshold value with respect to the socket type 1, 2 may prevent the socket 3 from damage when the electric vehicle 6 is charging at the respective socket 3.

Furthermore, the controller 14 may be adapted to determine whether the plug 4 is connected to the socket 3 by means of a first signal 18 indicative of whether the first grounding contact 7 of the plug 4 is connected to the corresponding socket grounding contact 9 of the socket 3 of socket type 1 or 2 and/or by means of a third signal 19 indicative of whether a voltage is applied to the voltage pin 12. Particularly, the controller 14 is adapted to determine whether the socket 3 is under tension based on the third signal 19. The first signal 18 may be obtained by the probing arrangement 15 based on measuring a voltage drop Vₒᵤₜ between the first grounding contact 7 and the electrical grounding 13, wherein the electrical grounding 13 only is provided to the first grounding contact 7 of the plug when the plug is inserted into the socket 3. The third signal 19 may be obtained by the probing arrangement 15 based on measuring a voltage difference between the voltage pin 12 and the electrical grounding 13 and/or between the voltage pins 11 and 12 (neutral pin and phase pin). The first 18 and third signal 19 obtained by the probing arrangement 15 are sent by the communication arrangement 22 to the controller 14.

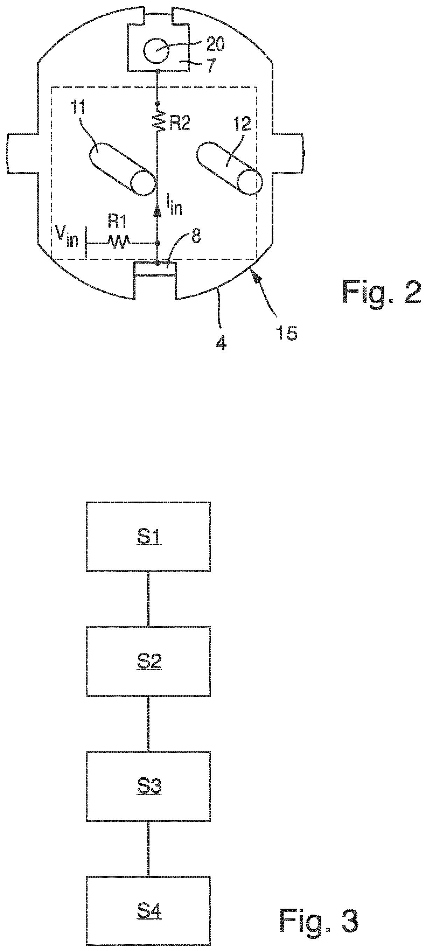

The probing arrangement 15 for obtaining the second signal 17 is shown in Figure 2 which depicts schematically the plug 4 comprising the voltage pins 11 and 12, the first 7 and second grounding contact 8 and a schematic embodiment of the probing arrangement 15, wherein the voltage pin 11 is neutral and the voltage pin 12 is the phase pin, that is carrying the operating voltage. The probing arrangement 15 is connected to the second 8 and first grounding contact 7 by means of an electric circuit, particularly an independent, separated secondary circuit or a secondary circuit branched from the primary circuit comprising the neutral and phase wires which are connected to the voltage pins 11 and 12. The test voltage Vᵢₙ causes a test current Iᵢₙ to flow within the probing arrangement 15 to the second grounding contact 8 only via the resistance R₁ when the second grounding contact 8 is connected to the electrical grounding 13, whereas the test current Iᵢₙ flows to the first grounding contact 7 via resistance R₁ and resistance R₂ if the second grounding contact 8 is isolated. The voltage drop Vₒᵤₜ is measured at resistance R₁ and/or resistance R₂ to form the second signal 17 which is to be sent to the controller 14 by the communication arrangement 22. The controller 14 may be adapted to determine the socket type 1, 2 to be the first socket type 1 if the second signal 17 comprises the voltage drop Vₒᵤₜ only at resistance R₁ whereas the controller 14 may be adapted to determine the socket type 1, 2 to be the second socket type if the second signal 17 comprises the voltage drop Vₒᵤₜ at resistances R₁ and R₂.

For instance, if the resistance R₁ has the same resistance as resistance R₂ (R₁ = R₂), only the voltage drop Vₒᵤₜ at the resistance R₁ is measured by the probing arrangement 15. The controller 14 may be adapted to determine the first socket type if the second signal 17 comprises half the test voltage Vᵢₙ, that is 0,5*Vᵢₙ, at resistance R₁ or may be adapted to determine the second socket type 2 if the second signal 17 comprises the test voltage Vin at resistance R₁. Alternatively, the voltage drop Vₒᵤₜ is measured only at resistance R₂ by the probing arrangement 15. In this case, the controller 14 may be adapted to determine the first socket type 1 if the second signal 17 comprises half the test voltage Vᵢₙ, that is 0,5*Vᵢₙ, or may be adapted to determine the second socket type 2 if the second signal 17 at resistance R₂ essentially equals zero.

Hence, the second signal 17 indicative of the socket type 1, 2 and/or the first signal 18 indicative of whether the plug 4 is inserted into the socket 3 may be derived from measuring the respective voltage drop Vₒᵤₜ at the resistance R₁ and/or the resistance R₂.

Furthermore, if the voltage drop Vₒᵤₜ at resistance R₁ and R₂ are both zero, the probing arrangement 15 may output the first signal 18 comprising the voltage drop values at resistance R₁ and R₂ wherein the controller 14 is adapted to determine that the plug 4 is not inserted into the socket 3 if the voltage drop Vₒᵤₜ is essentially equal to zero at resistance R₁ and resistance R₂. If the voltage drop Vₒᵤₜ at resistance R₁ or resistance R₂ is different than zero, the controller 14 may be adapted to determine that the plug 4 is inserted into the socket 3.

Supplementary or alternatively, the third signal 19 may be generated by measuring a voltage difference between the voltage pins 11 and 12 or between the voltage pin 12 and the first grounding contact 7 (not shown). If the voltage difference, hence the third signal 19 is zero, the controller 14 may determine that the plug 4 is not connected to the socket 3 or if the third signal 19 is different than zero or corresponds to a threshold value, the controller 14 may determine that the plug 4 is connected to the socket 3. The test voltage Vin or the test current Iᵢₙ may be a direct or alternating voltage or current.

Figure 3 very schematically shows a method for determining the socket type 1, 2 of the socket 3 comprising four steps S1 to S3. In a first step S1, the plug 4, preferably the plug 4 of a charging cordset 5 for charging the battery of an electric vehicle 6 is inserted into the socket 3. In a second step S2, the first grounding contact 7 of the plug 4 is connected to a first grounding contact 9 of the socket 3 by the insertion of the plug 4 into the socket 3. The controller 14 may then check whether the plug is inserted into the socket 3 and/or whether the socket 3 is energized by means of the first signal 18 and/or the third signal 19.

In a third step S3, it is determined, preferably by the controller 14 by means of the second signal 17, whether the second grounding contact 8 of the plug 4 is connected to a second grounding contact of the socket 10 and the socket type 1, 2 is determined on the basis of this measurement, preferably the second signal 17.

In a fourth step S4, a charging mode is selected by the controller 14 based on the socket type 1, 2. The charging mode is a first charging mode with a first current threshold when the first socket type 1 is determined by the controller or a second charging mode with a second current threshold when the second socket type 2 is determined. The current threshold values are for instance below or may be equal to the electric fuse currents of the respective socket types 1, 2. The selection of the charging mode with respect to the socket type 1, 2 prevents damage from the socket 3 due to charging.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention. The features disclosed in the foregoing description, claims and figures may be relevant to the realization of the invention both individually and in any combination with each other.

The example shows a CEE 7/7 Schuko plug which is able to distinguish between German and French outlets. By separating the two sides of the ground contact in the CEE 7/7 Schuko plug and introducing a voltage to the contact without the pin hole, the processor can determine whether the plug is inserted in a German or French outlet. If Vₒᵤₜ = Vᵢₙ, the outlet is a French CEE 7/5. If Vₒᵤₜ = 0, the outlet is a German CEE 7/3.

Overall, the example shows how the invention provides a CEE 7/7 smart plug being able to distinguish between German and French outlets.

**List of reference numerals**

| | |
|---|---|
| first socket type | 1 |
| second socket type | 2 |
| socket | 3 |
| plug | 4 |
| charging cordset | 5 |
| vehicle | 6 |
| first grounding contact (plug) | 7 |
| second grounding contact (plug) | 8 |
| first grounding contact (socket) | 9 |
| second grounding contact (socket) | 10 |
| voltage pin 1 | 11 |
| Voltage pin 2 (hot) | 12 |
| test voltage | Vᵢₙ |
| voltage drop | Vₒᵤₜ |
| test current | Iᵢₙ |
| electrical grounding | 13 |
| controller | 14 |
| probing arrangement | 15 |
| voltage converter | 16 |
| first signal | 17 |
| second signal | 18 |
| third signal | 19 |
| pin hole | 20 |
| resistance | R |
| first resistance | R₁ |
| second resistance | R₂ |
| connector | 21 |
| communication arrangement | 22 |

## Claims

1. Method for determining a socket type (1, 2) of a socket (3), including the steps of:
a. inserting a plug (4), preferably a plug (4) of a charging cordset (5) for charging the battery of an electric vehicle (6), into the socket (3),
b. connecting a first grounding contact (7) of the plug (4) to a first grounding contact (9) of the socket (3) by the insertion of the plug (4) into the socket (3), and
c. determining whether a second grounding contact (8) of the plug (4) is connected to a second grounding contact (10) of the socket (3) and determining the socket type (1, 2) on the basis of this measurement.

2. Method according to claim 1, including the steps of:
a. determining the socket type (1, 2) to be a first socket type (1) if the second grounding contact (8) of the plug (4) is isolated (not connected to the second grounding contact of the socket),
b. determining the socket type (1, 2) to be a second socket type (2) if the second grounding contact (8) of the plug (4) is connected to the second grounding contact (10) of the socket (3).

3. Method according to one of the preceding claims, wherein the first socket type (1) corresponds to a CEE 7/5 type socket (3) according to a CEE 7 standard, particularly to a French type E socket (1, 3), and the second socket type (2) corresponds to a CEE 7/3 type socket (3) according to the CEE 7 standard, particularly to a German type F socket (2, 3).

4. Method according to one of the preceding claims, wherein the measurement whether the second grounding contact (8) of the plug (4) is connected to the second grounding contact (10) of the socket comprises the steps of:
a. applying a test voltage (Vᵢₙ) to the second grounding contact (8) of the plug (4),
b. measuring a voltage drop (Vₒᵤₜ) between the second grounding contact (8) and an electrical grounding (0 V),
c. determining that the second grounding contact (8) of the plug (4) is connected to the second grounding contact (10) of the socket (3) if the voltage drop (Vₒᵤₜ) essentially equals zero or that the second grounding contact (8) of the plug (4) is isolated (not connected to the second grounding contact of the socket) if the voltage drop (Vₒᵤₜ) essentially equals the test voltage (Vᵢₙ).

5. Method according to one of the preceding claims, wherein determining whether the plug (4) is inserted into the socket (3) comprises the steps of:
a. applying the test voltage (Vᵢₙ) to the first grounding contact of the plug (4),
b. measuring the voltage drop (Vₒᵤₜ) between the first grounding contact (8) and the electrical grounding (0 V),
c. determining that the plug (4) is inserted into the socket (3) if the voltage drop (Vₒᵤₜ) between the first grounding contact (7) of the plug (4) and the electrical grounding (0 V) essentially equals zero (first grounding contact of the plug connected to the first grounding contact of the socket) or that the plug (4) is not inserted into the socket (3) if the voltage drop (Vₒᵤₜ) essentially equals the test voltage (Vᵢₙ).

6. Method according to one of the preceding claims, wherein determining whether the plug (4) is inserted into the socket (3) comprises the steps of:
a. measuring an operating voltage between at least one voltage pin (11, 12) of the plug (4) and the electrical grounding (0 V) or between at least two voltage pins (11, 12),
b. determining that the plug (4) is inserted into the socket (3) if the operating voltage corresponds to a threshold value or that the plug (4) is not inserted into the socket (3) if the operating voltage is zero.

7. Method for selecting a charging mode of a charging operation of a battery of an electrical vehicle (6), including the steps of determining the socket type (1, 2) on the basis of one of the preceding claims and selecting the charging mode on the basis of the socket type (1, 2) determined.

8. Electrical plug (4), preferably a plug (4) of a charging cordset (5) for charging the battery of an electric vehicle (6), the plug (4) including:
a. a first grounding contact (7) and a second grounding contact (8), wherein the first and second grounding contacts (7, 8) are electrically isolated from one another, and
b. a probing arrangement (15) connected to the second grounding contact (8),
wherein the probing arrangement (15) is adapted to output a second signal (18) indicative of whether the second grounding contact (8) is connected to a second grounding contact (10) of a socket (3) when being inserted into the socket (3).

9. Electrical plug (4) according to claim 8, wherein the probing arrangement (15) is connected to a first grounding contact (7) and adapted to output a first signal (17) indicative of whether the first grounding contact (7) is connected to a first grounding contact (9) of the socket (3) and/or the probing arrangement (15) is connected to at least one voltage pin (11, 12), wherein the probing arrangement (15) is adapted to output a third signal (19) indicative whether an operating voltage is applied to the at least one voltage pin (11, 12).

10. Electrical plug (4) according to one of the claims 8 to 9, including a communication arrangement (22) for transferring the respective signal (17, 18, 19) to a controller (14) for determining the socket type (1, 2) on the basis of the second signal (18) and/or for determining whether the electrical plug (4) is inserted into the socket on the basis of the first (17) and/or third signal (19).

11. Electrical plug (4) according to one of the claims 8 to 10, wherein the probing arrangement (15) and/or the communication arrangement (22) is connected to the controller (14), wherein the plug (4) preferably comprises the controller (14).

12. Electrical plug (4) according to one of the claims 8 to 11, wherein a type of the electrical plug (4) corresponds to a CEE 7/7 plug type according to a CEE 7 standard, particularly to a Schuko type plug (4), wherein the first grounding contact of the plug (4) preferably provides a pin hole (20).

13. Controller (14) comprising at least one processor and a computer readable storage medium, wherein the computer readable storage medium comprises instructions which, when executed by the at least one processor, cause the controller (14) to determine a socket type (1, 2) on the basis of a second signal (18) indicative whether a second grounding contact (8) of an electrical plug (4) is connected to a second grounding contact (10) of a socket (3).

14. Controller (14) according to claim 13, wherein the computer readable storage medium comprises instructions which, when executed by the at least one processor, cause the controller (14) to determine whether the electrical plug (4) is inserted into the socket (3) based on a first signal (17) indicative whether a first grounding contact (7) of the electrical plug (4) is connected to a first grounding contact (9) of the socket (3) and/or based on a third signal (19) indicative whether an operating voltage is applied to at least one voltage pin (11, 12) of the electrical plug (4).

15. Charging cordset (5) for charging a battery of an electric vehicle (6) comprising at least one electrical plug (4) according to one of the claims 8 to 12 and/or at least one controller (14) according to one of the claims 13 to 14.
